# EUROPEAN PATENT SPECIFICATION

(11) **EP 4 137 758 B1**
(45) Date of publication and mention of the grant of the patent: **15.05.2024**
(21) Application number: 21896537.4
(22) Date of filing: 27.09.2021
(51) Int. Cl.: F25B 47/02, F25D 21/06, F25B 41/20, F25B 49/02, F25D 21/00

(54) **REFRIGERATOR REFRIGERATION SYSTEM AND REFRIGERATOR DESFROSTING METHOD**
KÜHLSCHRANKKÜHLSYSTEM UND ENTEISENVERFAHREN FÜR KÜHLSCHRANK
SYSTÈME DE RÉFRIGÉRATION DE RÉFRIGÉRATEUR ET PROCÉDÉ DE DÉGIVRAGE DE RÉFRIGÉRATEUR

(30) Priority: 30.11.2020 CN 202011384417
(43) Date of publication of application: 22.02.2023
(73) Proprietor: Hefei Midea Refrigerator Co., Ltd., Hefei, Anhui 230088 (CN); Hefei Hualing Co., Ltd., Hefei, Anhui 230601 (CN); Midea Group Co., Ltd., Foshan, Guangdong 528311 (CN)
(72) Inventor: WANG, Jindong, Hefei, Anhui 230088 (CN)
(74) Representative: RGTH
(86) International application number: PCT/CN2021/120991
(87) International publication number: WO 2022/111035

(56) References cited:
- WO-A1-2015/149840
- WO-A1-2019/200448
- CN-A- 106 403 466
- CN-A- 111 520 942
- CN-A- 111 520 942
- DE-A1-102019 200 673
- DE-A1-102019 200 673
- US-A- 4 565 070
- US-A- 4 565 070
- US-A1- 2012 023 975

## Description

### TECHNICAL FIELD

The present invention relates to the technical field of refrigerators, in particular to a refrigerator cooling system and a method for defrosting a refrigerator.

### BACKGROUND

When the evaporator in the refrigerator is frosted, the thickness of the frost layer is not uniform. The current defrosting technology mainly uses heating devices such as heating tubes to heat the evaporator, which is difficult to accurately defrost, resulting in waste of heat. The document CN 111 520 942 A discloses a refrigerator cooling system comprising a refrigerant circulation flow path provided with a compressor, a condenser, a throttling device and an evaporator, a defrosting branch and a switching device, wherein the evaporator comprises a heat exchange core tube and the heat exchange core tube comprises a main inlet communicated with the throttling device and a main outlet communicated with the compressor.

### SUMMARY

The main objective of the present invention is to provide a refrigerator cooling system and a method for defrosting a refrigerator, aiming to optimize the cooling system of the refrigerator, save electric energy and improve the user experience.

In order to achieve the above objective, the present invention provides a refrigerator cooling system according to claim 1 and a method for defrosting according to claim 12. Said refrigerator cooling system includes a refrigerant circulation flow path provided with a compressor, a condenser, a throttling device and an evaporator, a defrosting branch and a switching device. The evaporator includes a heat exchange core tube, the heat exchange core tube includes a main inlet communicated with the throttling device and a main outlet communicated with the compressor, a middle section of the heat exchange core tube is provided with at least one middle inlet, a section of the refrigerant circulation flow path between an exhaust port of the compressor and the main inlet of the evaporator is a first flow path section, both the condenser and the throttling device are located on the first flow path section;
the defrosting branch is connected among the exhaust port of the compressor, the main inlet and the at least one middle inlet,
the switching device is for switching the defrosting branch to communicate the exhaust port of the compressor with at least one of the main inlet and the at least one middle inlet, to enter a defrosting working mode, and
the switching device is further for switching the first flow path section to be in a circulating state, to enter a cooling working mode.

In an embodiment, the defrosting branch has one input port and a plurality of output ports, the input port is connected between the exhaust port of the compressor and the condenser, the plurality of output ports are respectively provided corresponding to the main inlet and at least one middle inlet,
the switching device includes a first switching device and a second switching device, the first switching device is for switching at least one of the plurality of output ports to communicate with one of the main inlet and the at least one middle inlet, and the second switching device is for switching one of the input port and the first flow path section to communicate with the exhaust port of the compressor.

In an embodiment, the first switching device includes a first three-way valve, the first three-way valve is formed with three first communication ports that communicate with each other, two of the three first communication ports are connected in series between the defrosting branch and the main inlet, and the other first communication port is connected to one of the middle inlets.

In an embodiment, the middle section of the heat exchange core tube is provided with a plurality of middle inlets, the first switching device includes a plurality of first three-way valves, two first communication ports of each of the plurality of first three-way valves are connected in series between the defrosting branch and the main inlet, and the other communication ports of the plurality of first three-way valves are correspondingly connected to the plurality of middle inlets.

In an embodiment, the first three-way valve is an electromagnetic three-way valve.

In an embodiment, the second switching device includes a second three-way valve, the second three-way valve is formed with three second communication ports that communicate with each other, a first one of the three second communication ports is communicated with the first flow path section, a second one of the three second communication ports is communicated with the exhaust port of the compressor, and a third one of the three second communication ports is communicated with the defrosting branch.

In an embodiment, the second three-way valve is an electromagnetic three-way valve.

In an embodiment, the switching device is an electrical switching device, and the refrigerator cooling system further includes:
a temperature sensor for detecting a surface temperature of the evaporator; and
a control assembly electrically connected to the temperature sensor and the electrical switching device, for switching a working mode of the refrigerator cooling system according to a temperature obtained by the temperature sensor.

In an embodiment, the at least one middle inlet is configured to divide the heat exchange core tube into a plurality of heat exchange sections, and a plurality of the temperature sensors are provided corresponding to the plurality of the heat exchange sections.

The present invention further provides a method for defrosting a refrigerator applied to a refrigerator cooling system. The refrigerator cooling system includes a refrigerant circulation flow path provided with a compressor, a condenser, a throttling device and an evaporator, a defrosting branch and a switching device. The evaporator includes a heat exchange core tube, the heat exchange core tube includes a main inlet communicated with the throttling device and a main outlet communicated with the compressor, a middle section of the heat exchange core tube is provided with at least one middle inlet, a section of the refrigerant circulation flow path between an exhaust port of the compressor and the main inlet of the evaporator is a first flow path section, both the condenser and the throttling device are located on the first flow path section;
the defrosting branch is connected among the exhaust port of the compressor, the main inlet and the at least one middle inlet,
the switching device is for switching the defrosting branch to communicate the exhaust port of the compressor with at least one of the main inlet and the at least one middle inlet, to enter a defrosting working mode, and
the switching device is further for switching the first flow path section to be in a circulating state, to enter a cooling working mode;
the defrosting working mode includes a full defrosting mode and at least one partial defrosting mode, in response to the refrigerator cooling system being in the full defrosting mode, the defrosting branch is communicated with the exhaust port of the compressor and is provided corresponding to the main inlet, in response to the refrigerator cooling system being in the partial defrosting mode, the defrosting branch is communicated with the exhaust port of the compressor and is provided corresponding to the middle inlet,
the method for defrosting the refrigerator includes following operations:
obtaining a first working parameter of the refrigerator cooling system in response to the refrigerator cooling system being in the cooling working mode; and
switching the refrigerator cooling system to enter the full defrosting mode and the partial defrosting mode according to the first working parameter.

In an embodiment, the first working parameter is an actual working duration parameter T, and the operation of switching the refrigerator cooling system to enter the full defrosting mode and the partial defrosting mode according to the first working parameter includes:
when T is equal to T2, switching the refrigerator cooling system to enter the partial defrosting mode, and when a preset condition is reached, switching the refrigerator cooling system from the partial defrosting mode to the cooling working mode, T2 is a preset cooling duration for partial defrosting; and
when T is equal to T1, switching the refrigerator cooling system to enter the full defrosting mode, wherein T1 is a preset cooling duration period for full defrosting, and T1 is greater than T2.

In an embodiment, a plurality of middle inlets are provided, the plurality of middle inlets include a first middle inlet away from the main inlet and a second middle inlet adjacent to the main inlet, the partial defrosting mode includes a first partial defrosting mode and a second partial defrosting mode,
in response to the refrigerator cooling system being in the first partial defrosting mode, the defrosting branch is communicated with the exhaust port of the compressor and the first middle inlet,
in response to the refrigerator cooling system being in the second partial defrosting mode, the defrosting branch is communicated with the exhaust port of the compressor and the second middle inlet,
the operation of when T is equal to T2, switching the refrigerator cooling system to enter the partial defrosting mode, and when the preset condition is reached, switching the refrigerator cooling system from the partial defrosting mode to the cooling working mode includes:
when T is equal to T21, switching the refrigerator cooling system to enter the first partial defrosting mode, and when the preset condition is reached, switching the refrigerator cooling system from the first partial defrosting mode to the cooling working mode, wherein T21 is a preset cooling duration for a first partial defrosting, and T21 is less than T1; and
when T is equal to T22, switching the refrigerator cooling system to enter the second partial defrosting mode, and when the preset condition is reached, switching the refrigerator cooling system from the second partial defrosting mode to the cooling working mode, wherein T22 is a preset cooling duration for a second partial defrosting, and T22 is less than T1 and greater than T21.

In an embodiment, the operation of when T is equal to T2, switching the refrigerator cooling system to enter the partial defrosting mode, and when the preset condition is reached, switching the refrigerator cooling system from the partial defrosting mode to the cooling working mode further includes:
obtaining a second working parameter of the refrigerator cooling system,
the preset condition is that the second working parameter reaches a preset parameter value.

In an embodiment, the second working parameter is an actual temperature parameter t of the evaporator, the preset condition is that t is equal to 11, and t1 is a preset temperature value.

In an embodiment, the first working parameter and/or the second working parameter includes a temperature parameter and a working duration parameter.

In technical solutions of the present invention, the heat exchange core tube of the evaporator includes a main inlet communicated with the throttling device and a main outlet communicated with the compressor. A middle section of the heat exchange core tube is provided with at least one middle inlet. A section of the refrigerant circulation flow path between an exhaust port of the compressor and the main inlet of the evaporator is a first flow path section. The defrosting branch is connected among the exhaust port of the compressor, the main inlet and the at least one middle inlet. When the refrigerator cooling system is normally cooling, the switching device switches the first flow path section to be in a circulating state. When the refrigerator cooling system is defrosting, the switching device switches the defrosting branch to communicate the exhaust port of the compressor with at least one of the main inlet and the at least one middle inlet. When the exhaust port of the compressor is communicated with the main inlet, the entire heat exchange core tube is defrosted. When the exhaust port of the compressor is communicated with the at least one middle inlet, the heat exchange core tube is defrosted in part. Thus, the evaporator is defrosted in stages, the defrosting control is precise, the defrosting efficiency is increased, the energy consumption of defrosting is reduced, and the user experience is improved.

### BRIEF DESCRIPTION OF THE DRAWINGS

In order to more clearly illustrate the technical solutions in the embodiments of the present invention or in the prior art, the following briefly introduces the accompanying drawings that need to be used in the description of the embodiments or the prior art. Obviously, the drawings in the following description are only some embodiments of the present invention.
FIG. 1 is a schematic structural diagram of a refrigerator cooling system (in a cooling working mode) according to a first embodiment of the present invention
FIG. 2 is a schematic diagram of a refrigerant flow path of the refrigerator cooling system in FIG. 1 in a partial defrosting mode.
FIG. 3 is a schematic diagram of a refrigerant flow path of the refrigerator cooling system in FIG. 1 in a full defrosting mode.
FIG. 4 is a schematic structural diagram of a refrigerator cooling system (in a cooling working mode) according to a second embodiment of the present invention
FIG. 5 is a schematic diagram of a refrigerant flow path of the refrigerator cooling system in FIG. 4 in a first partial defrosting mode.
FIG. 6 is a schematic diagram of a refrigerant flow path of the refrigerator cooling system in FIG. 4 in a second partial defrosting mode.
FIG. 7 is a schematic diagram of a refrigerant flow path of the refrigerator cooling system in FIG. 4 in a full defrosting mode.
FIG. 8 is a schematic flowchart of a method for defrosting a refrigerator according to a first embodiment of the present invention
FIG. 9 is a schematic flowchart of a method for defrosting a refrigerator according to a second embodiment of the present invention
FIG. 10 is a schematic flowchart of a method for defrosting a refrigerator according to a third embodiment of the present invention
FIG. 11 is a schematic flowchart of a method for defrosting a refrigerator according to a fourth embodiment of the present invention

### Description of reference signs

| Reference sign | Name | Reference sign | Name |
|---|---|---|---|
| 100 | refrigerator cooling system | 513 | middle inlet |
| 1 | refrigerant circulation flow path | 6 | defrosting branch |
| 11 | first flow path section | 7 | switching device |
| 2 | compressor | 71 | first three-way valve |
| 3 | condenser | 711 | first communication port |
| 4 | throttling device | 72 | second three-way valve |
| 5 | evaporator | 721 | second communication port |
| 51 | heat exchange core tube | 8 | temperature sensor |
| 511 | main inlet | a | flow path in the cooling working mode |
| 512 | main outlet | b | flow path in the defrosting working mode |

The realization of the objective, functional characteristics, and advantages of the present invention are further described with reference to the accompanying drawings.

### DETAILED DESCRIPTION OF THE EMBODIMENTS

The technical solutions of the embodiments of the present invention will be described in more detail below with reference to the accompanying drawings.

It should be noted that if there is a directional indication (such as up, down, left, right, front, rear...) in the embodiments of the present invention, the directional indication is only used to explain the relative positional relationship, movement, etc. of the components in a certain posture (as shown in the drawings). If the specific posture changes, the directional indication will change accordingly.

Besides, the descriptions associated with, e.g., "first" and "second," in the embodiments of present disclosure are merely for descriptive purposes, and cannot be understood as indicating or suggesting relative importance or impliedly indicating the number of the indicated technical feature. Therefore, the feature associated with "first" or "second" can expressly or impliedly include at least one such feature. In addition, the technical solutions between the various embodiments can be combined with each other, but they must be based on the realization of those of ordinary skill in the art.

When the evaporator in the refrigerator is frosted, the thickness of the frost layer is not uniform. The current defrosting technology mainly uses heating devices such as heating tubes to heat the evaporator, which is difficult to accurately defrost, resulting in waste of heat.

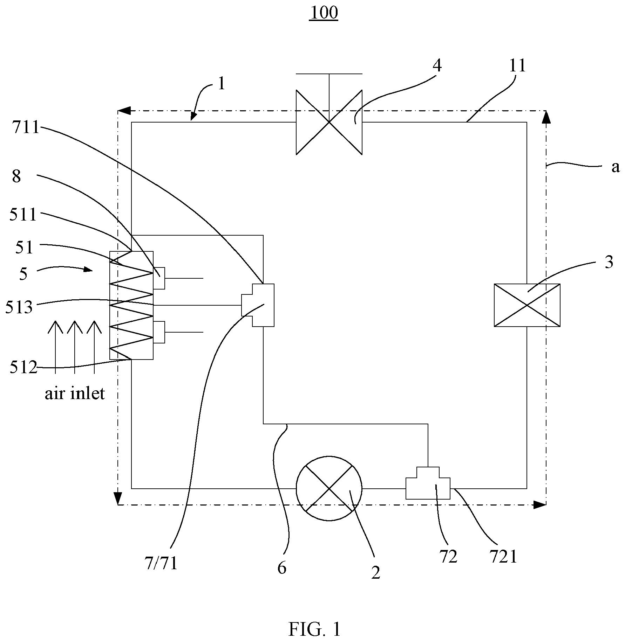

In view of this, the present invention provides a refrigerator cooling system. FIG. 1 to FIG. 7 are schematic structural diagrams of a refrigerator cooling system according to some embodiments of the present invention.

As shown in FIG. 1 to FIG. 4, the refrigerator cooling system 100 includes a refrigerant circulation flow path 1. The refrigerant circulation flow path 1 is provided with a compressor 2, a condenser 3, a throttling device 4 and an evaporator 5. The evaporator 5 includes a heat exchange core tube 51. The heat exchange core tube 51 includes a main inlet 511 communicated with the throttling device 4 and a main outlet 512 communicated with the compressor 2. A middle section of the heat exchange core tube 51 is provided with at least one middle inlet 513. A section of the refrigerant circulation flow path 1 between an exhaust port of the compressor 2 and the main inlet 511 of the evaporator 5 is a first flow path section 11. Both the condenser 3 and the throttling device 4 are located on the first flow path section 11. The refrigerator cooling system 100 further includes a defrosting branch 6 and a switching device 7. The defrosting branch 6 is connected among the exhaust port of the compressor 2, the main inlet 511 and the at least one middle inlet 513. The switching device 7 is for switching the defrosting branch 6 to communicate the exhaust port of the compressor 2 with at least one of the main inlet 511 and the at least one middle inlet 513, to enter a defrosting working mode, and the switching device 7 is further for switching the first flow path section 11 to be in a circulating state, to enter a cooling working mode.

In technical solutions of the present invention the heat exchange core tube 51 of the evaporator 5 includes a main inlet 511 communicated with the throttling device 4 and a main outlet 512 communicated with the compressor 2. A middle section of the heat exchange core tube 51 is provided with at least one middle inlet 513. A section of the refrigerant circulation flow path 1 between an exhaust port of the compressor 2 and the main inlet 511 of the evaporator 5 is a first flow path section 11. The defrosting branch 6 is connected among the exhaust port of the compressor 2, the main inlet 511 and the at least one middle inlet 513. When the refrigerator cooling system 100 is normally cooling, the switching device 7 switches the first flow path section 11 to be in a circulating state. When the refrigerator cooling system 100 is defrosting, the switching device 7 switches the defrosting branch 6 to communicate the exhaust port of the compressor 2 with at least one of the main inlet 511 and the at least one middle inlet 513. When the exhaust port of the compressor 2 is communicated with the main inlet 511, the entire heat exchange core tube 51 is defrosted. When the exhaust port of the compressor 2 is communicated with the at least one middle inlet 513, the heat exchange core tube 51 is defrosted in part. Thus, the evaporator 5 is defrosted in stages, the defrosting control is precise, the defrosting efficiency is increased, the energy consumption of defrosting is reduced, and the user experience is improved.

It should be noted that the defrosting branch 6 makes the refrigerant not pass through the throttling device 4, and the refrigerant has a higher temperature. When the refrigerant with a higher temperature directly enters the evaporator 5, the defrosting of the heat exchange core tube 51 is realized, and the evaporator 5 is defrosted in stages. The defrosting branch 6 can be a plurality of parallel branches. One end of the plurality of branches is used to communicate with the exhaust port of the compressor 2, and the other end is communicated with the main inlet 511 and the at least one middle inlet 513, respectively. The switching device 7 only needs to switch one of the branches to conduct, and of course, a plurality of the branches can be conducted at the same time.

In an embodiment, the defrosting branch 6 is a single branch, one end is communicated with the exhaust port of the compressor 2, and the other end can be switched to select different inlets on the heat exchange core tube 51. The defrosting branch 6 has one input port and a plurality of output ports. The input port is connected between the exhaust port of the compressor 2 and the condenser 3. The plurality of output ports are respectively provided corresponding to the main inlet 511 and at least one middle inlet 513. The switching device 7 includes a first switching device and a second switching device. The first switching device is for switching at least one of the plurality of output ports to communicate with one of the main inlet 511 and the at least one middle inlet 513. The second switching device is for switching one of the input port and the first flow path section 11 to communicate with the exhaust port of the compressor 2. Through the cooperation of the first switching device and the second switching device, the switching between the defrosting working mode and the cooling working mode of the refrigerator cooling system 100 is easily realized, and the evaporator 5 is also easily defrosted in stages, which has a good effect.

Both the first switching device and the second switching device can be configured as a valve combination structure, such as two one-way valves arranged in parallel, etc. In an embodiment, the first switching device includes a first three-way valve 71, the first three-way valve 71 is formed with three first communication ports 711 that communicate with each other, two of the three first communication ports 711 are connected in series between the defrosting branch 6 and the main inlet 511, and the other first communication port 711 is connected to one of the middle inlets 513. The first three-way valve 71 realizes switching at least one of the output ports to communicate with the corresponding one of the main inlet 511 and the at least one middle inlet 513, the structure is simple, and the switching is convenient.

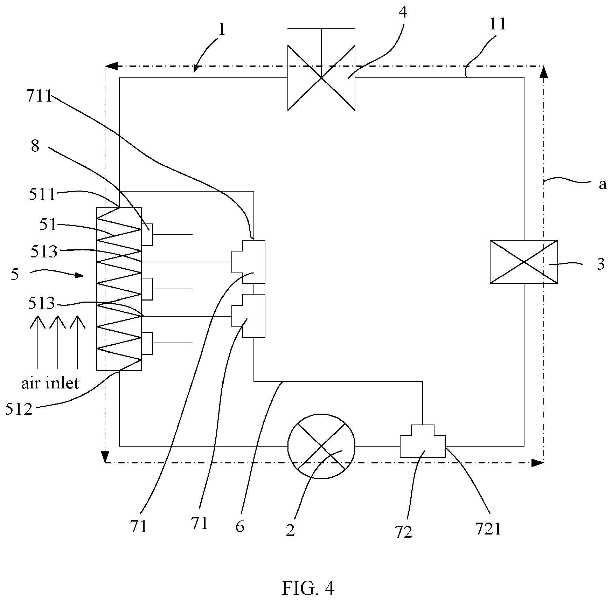

When there are a plurality of middle inlets 513, as shown in FIG. 4 to FIG. 7, the first switching device includes a plurality of first three-way valves 71, two first communication ports 711 of each of the plurality of first three-way valves 71 are connected in series between the defrosting branch 6 and the main inlet 511, and the other communication ports of the plurality of first three-way valves 71 are correspondingly connected to the plurality of middle inlets 513. Each of the first three-way valves 71 switches one of the plurality of output ports to communicate with the corresponding middle inlet 513, which has a simple structure and is convenient for switching.

In an embodiment, the first three-way valve 71 is an electromagnetic three-way valve, which facilitates automatic control of the first three-way valve 71, has a high degree of automation, and improves user experience.

In an embodiment, the second switching device includes a second three-way valve 72, and the second three-way valve 72 is formed with three second communication ports 721 that communicate with each other. A first one of the three second communication ports 721 is communicated with the first flow path section 11, a second one of the three second communication ports 721 is communicated with the exhaust port of the compressor 2, and a third one of the three second communication ports 721 is communicated with the defrosting branch 6. The second three-way valve 72 realizes switching one of the input port and the first flow path section 11 to communicate with the exhaust port of the compressor 2, which has a simple structure and is convenient for switching.

In an embodiment, the second three-way valve 72 is an electromagnetic three-way valve, which facilitates automatic control of the second three-way valve 72, has a high degree of automation, and improves user experience.

It should be noted that the switching between the cooling working mode and the defrosting working mode of the refrigerator cooling system 100 may take the time parameter as the reference object. For example, after the refrigerator cooling system operates in the cooling working mode for a period of time, the refrigerator cooling system switches from the cooling working mode to the defrosting working mode. The refrigerator cooling system also switches from the defrosting working mode to the cooling working mode after the refrigerator cooling system operates in the defrosting working mode for a period of time. The switching can also take the temperature parameter as the reference object. For example, when the surface temperature of the evaporator 5 is lower than the first preset temperature after the refrigerator cooling system operates in the cooling working mode for a period of time, the refrigerator cooling system 100 switches from the cooling working mode to the defrosting working mode. It can also be that after the refrigerator cooling system 100 operates in the defrosting working mode for a period of time, the surface temperature of the evaporator 5 is higher than the second preset temperature, the refrigerator cooling system 100 switches from the defrosting working mode to the cooling working mode.

When the switching takes the temperature parameter as the reference object, after the refrigerator cooling system 100 operates in the defrosting working mode for a period of time, the surface temperature of the evaporator 5 is higher than the second preset temperature, the refrigerator cooling system 100 switches from the defrosting working mode to the cooling working mode. In an embodiment, the switching device 7 is an electrical switching device. The refrigerator cooling system further includes a temperature sensor 8 and a control assembly. The temperature sensor 8 is for detecting a surface temperature of the evaporator 5. The control assembly is electrically connected to the temperature sensor 8 and the electrical switching device, for switching a working mode of the refrigerator cooling system 100 according to a temperature obtained by the temperature sensor 8. This arrangement enables the refrigerator cooling system 100 to switch between the cooling working mode and the defrosting working mode more intelligently.

In an embodiment, the at least one middle inlet 513 is configured to divide the heat exchange core tube 51 into a plurality of heat exchange sections, and a plurality of the temperature sensors 8 are provided corresponding to the plurality of the heat exchange sections. The plurality of the temperature sensors 8 can detect the temperature on the entire length of the heat exchange core tube 51, and the obtained temperature is relatively accurate, which is convenient for controlling the refrigerator cooling system 100 to achieve accurate defrosting.

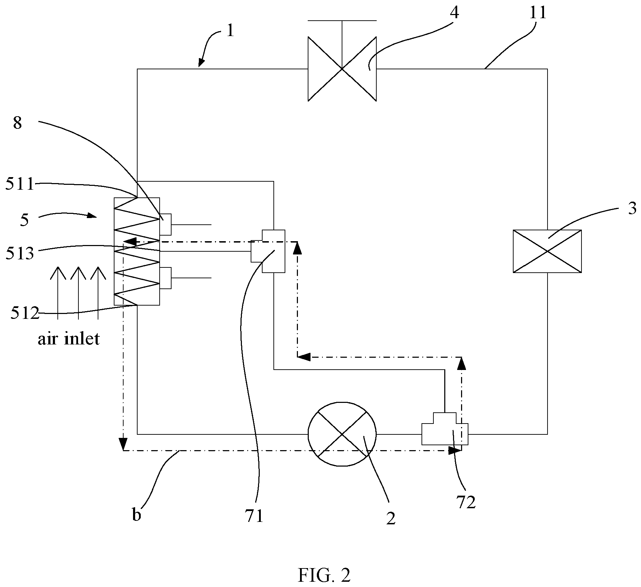

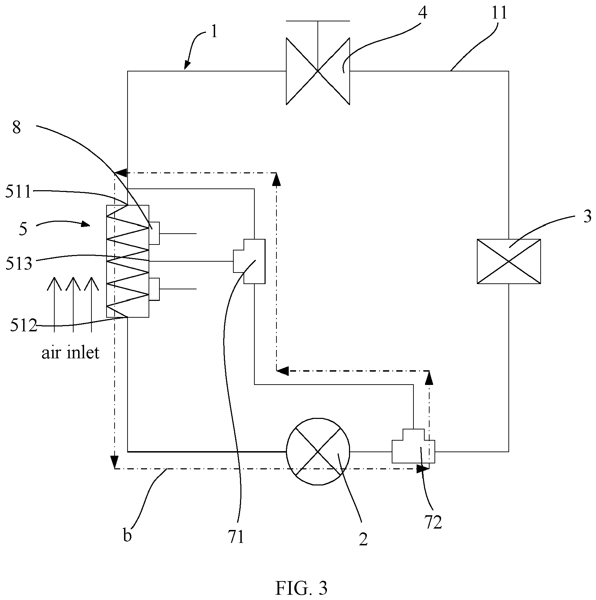

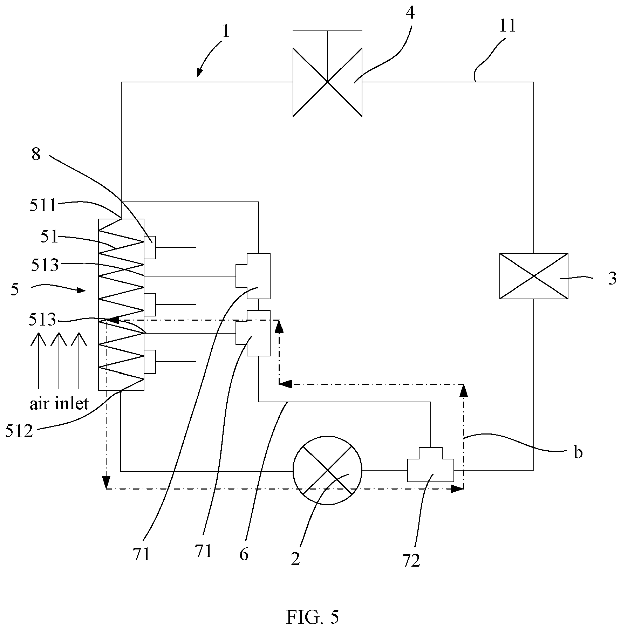

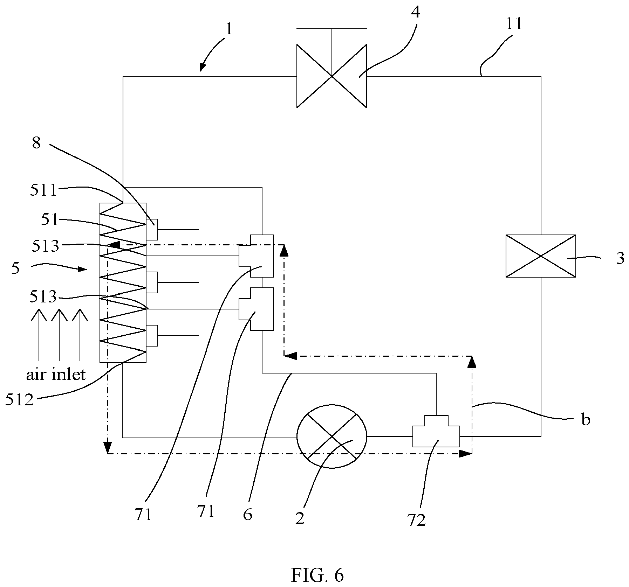

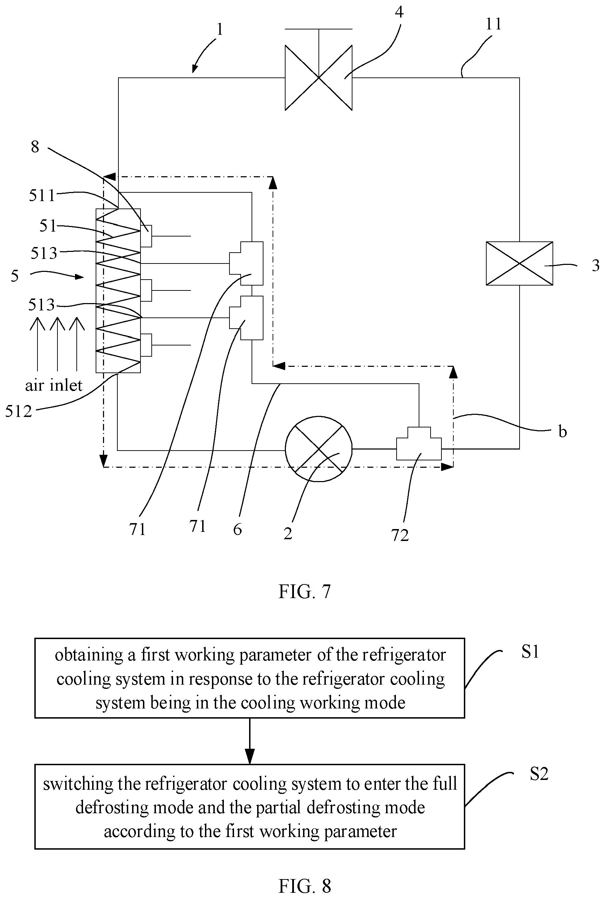

In the following, in two embodiments, the corresponding flow direction of the refrigerant in the refrigerant circulation flow path 1 and the action of the three-way valve illustrate the principle of the refrigerator cooling system 100 switching between the cooling working mode and the defrosting working mode.
1. As shown in FIG. 1, a flow path a in the cooling working mode is provided. In FIG. 1, the refrigerator cooling system 100 is in the cooling working mode. The refrigerant in the compressor 2 passes through the condenser 3 to form a liquid refrigerant with high temperature and high pressure. After the liquid refrigerant passes through the throttling device 4, a liquid refrigerant with low temperature and low pressure is formed, and after the refrigerant passes through the evaporator 5, a gaseous refrigerant with low temperature and low pressure is formed, and then flows back into the compressor 2.
2. As shown in FIG. 2, a flow path b in the defrosting working mode is provided. In FIG. 2, the refrigerator cooling system 100 is in the defrosting working mode. The refrigerant in the compressor 2 enters the middle inlet 513 of the heat exchange core tube 51 after passing through the second three-way valve 72 and the first three-way valve 71. The liquid refrigerant with high temperature and high pressure in the compressor 2 flows back into the compressor 2 after passing through the heat exchange core tube 51 in part.
3. As shown in FIG. 3, a flow path b in the defrosting working mode is provided. In FIG. 3, the refrigerator cooling system 100 is in the defrosting working mode. The refrigerant in the compressor 2 enters the main inlet 511 of the heat exchange core tube 51 after passing through the second three-way valve 72 and the first three-way valve 71. The high -temperature and high-pressure liquid refrigerant in the compressor 2 flows back into the compressor 2 after passing through the heat exchange core tube 51 as a whole.
4. As shown in FIG. 4, a flow path a in the cooling working mode is provided. In FIG. 4, the refrigerator cooling system 100 is in the cooling working mode. The refrigerant in the compressor 2 passes through the condenser 3 to form a liquid refrigerant with high temperature and high pressure. After the liquid refrigerant passes through the throttling device 4, a liquid refrigerant with low temperature and low pressure is formed, and after the refrigerant passes through the evaporator 5, a gaseous refrigerant with low temperature and low pressure is formed, and then flows back into the compressor 2.
5. As shown in FIG. 5, a flow path b in the defrosting working mode is provided. In FIG. 5, the refrigerator cooling system 100 is in the defrosting working mode. The refrigerant in the compressor 2 enters the first middle inlet of the heat exchange core tube 51 after passing through the second three-way valve 72 and the first three-way valve 71. The liquid refrigerant with high temperature and high pressure in the compressor 2 flows back into the compressor 2 after passing through the heat exchange core tube 51 in part.
6. As shown in FIG. 6, a flow path b in the defrosting working mode is provided. In FIG. 6, the refrigerator cooling system 100 is in the defrosting working mode. The refrigerant in the compressor 2 enters the second middle inlet of the heat exchange core tube 51 after passing through the second three-way valve 72 and the first three-way valve 71. The liquid refrigerant with high temperature and high pressure in the compressor 2 flows back into the compressor 2 after passing through the heat exchange core tube 51 in part.
7. As shown in FIG. 7, a flow path b in the defrosting working mode is provided. In FIG. 7, the refrigerator cooling system 100 is in the defrosting working mode. The refrigerant in the compressor 2 enters the main inlet 511 of the heat exchange core tube 51 after passing through the second three-way valve 72 and the first three-way valve 71. The liquid refrigerant with high temperature and high pressure in the compressor 2 flows back into the compressor 2 after passing through the heat exchange core tube 51 as a whole.

The present invention further provides a method for defrosting a refrigerator. FIG. 8 to FIG. 11 are schematic diagrams of a method for defrosting a refrigerator according to some embodiments of the present invention

As shown in FIG. 8, FIG. 8 is a schematic flowchart of a method for defrosting a refrigerator according to a first embodiment of the present invention

The defrosting working mode includes a full defrosting mode and at least one partial defrosting mode. When the refrigerator cooling system is in the full defrosting mode, the defrosting branch 6 is communicated with the exhaust port of the compressor 2 and is provided corresponding to the main inlet 511. When the refrigerator cooling system is in the partial defrosting mode, the defrosting branch 6 is communicated with the exhaust port of the compressor 2 and is provided corresponding to the middle inlet 513.

The method for defrosting the refrigerator includes following operations:
S1, obtaining a first working parameter of the refrigerator cooling system in response to the refrigerator cooling system 100 being in the cooling working mode.

It should be noted that the cooling system of the refrigerator needs to provide cooling capacity for the refrigerating chamber and the freezing chamber. After a long time of operation, the refrigerator will form frost, and the thickness of the frost on core tubes of the evaporator 5 is not uniform.

S2, switching the refrigerator cooling system to enter the full defrosting mode and the partial defrosting mode according to the first working parameter.

It should be noted that the first working parameter includes a temperature parameter and a working duration parameter. When the time parameter is used as the reference object, for example, after the refrigerator cooling system operates in the cooling working mode for a period of time, the refrigerator cooling system switches from the cooling working mode to the defrosting working mode. The refrigerator cooling system can switch from the defrosting mode to the cooling working mode after operating in the defrosting working mode for a period of time. The temperature parameter may also be the reference object. For example, when the temperature of the evaporator 5 is lower than the preset temperature value, the cooling working mode is switched to the defrosting working mode. When the temperature of the evaporator 5 is greater than a preset temperature value, the defrosting working mode is switched to the cooling working mode.

In an embodiment, when the time parameter is used as the reference object, after the refrigerator works for a long time, the refrigerator will be frosted, and it needs to be defrosted at this time. It is possible to set a preset duration to start the defrosting mode of the refrigerator, such as 6h, 8h, 10h, 12h, or the like. It can also be considered according to the actual working environment of the refrigerator, such as humidity environment. Different humidity environments corresponding to different preset durations. When the actual duration reaches the preset duration, the defrosting working mode can be automatically started to perform the defrosting operation on the refrigerator. In addition, if the duration parameter reaches 6 hours, the refrigerator cooling system 100 is switched to enter the partial defrosting mode, and when the duration parameter reaches 8 hours, the refrigerator cooling system 100 is switched to enter the full defrosting mode.

In technical solutions of the present invention when the refrigerator cooling system 100 is in the cooling working mode, the first working parameter of the refrigerator cooling system 100 is obtained. The refrigerator cooling system 100 is switched to enter the full defrosting mode and the partial defrosting mode according to the first working parameter. Thus, the evaporator 5 is defrosted in stages, the defrosting control is precise, the defrosting efficiency is increased, the energy consumption of defrosting is reduced, and the user experience is improved.

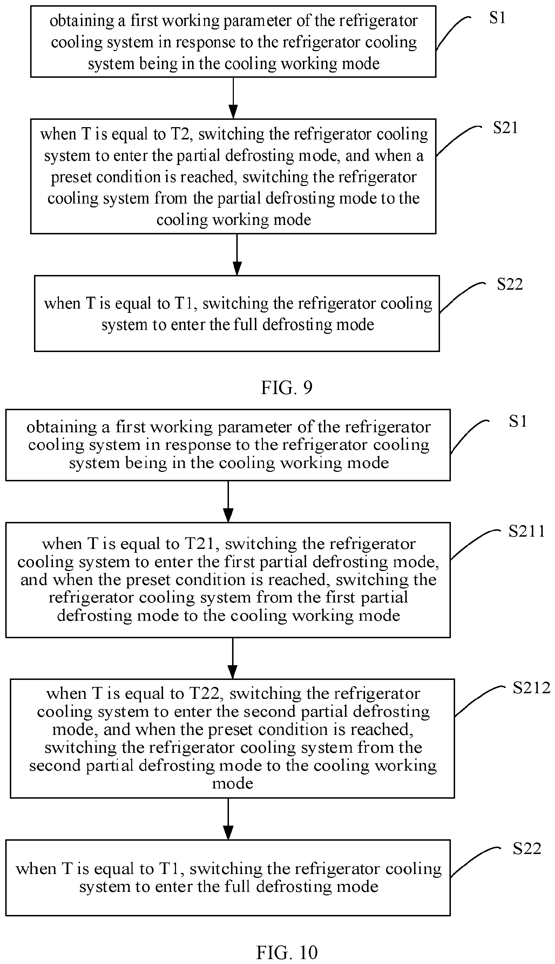

As shown in FIG. 9, FIG. 9 is a schematic flowchart of a method for defrosting a refrigerator according to a second embodiment of the present invention

The first working parameter is an actual working duration parameter T.

In this embodiment, with respect to the first embodiment of the method for defrosting a refrigerator, the method further includes the following operations:
S21, when T is equal to T2, switching the refrigerator cooling system to enter the partial defrosting mode, and when a preset condition is reached, switching the refrigerator cooling system from the partial defrosting mode to the cooling working mode, T2 is a preset cooling duration for partial defrosting; and
S22, when T is equal to T1, switching the refrigerator cooling system to enter the full defrosting mode, T1 is a preset cooling duration period for full defrosting, and T1 is greater than T2.

It should be noted that the T2 is a specific value smaller than T1, for example, when T1 is 10h, T2 may be 6h or 8h, and so on.

In addition, the preset condition may be satisfying a time condition, or satisfying a temperature condition, and so on.

When the refrigerator cooling system 100 works for a short period of time, the heat exchange core tube 51 of the evaporator 5 is partially frosted, and it is only necessary to defrost the part that is prone to frost. When the refrigerator cooling system 100 works for a long time, the heat exchange core tube 51 of the evaporator 5 will be frosted as a whole, and the entire heat exchange core tube 51 needs to be defrosted. Thus, the evaporator 5 is defrosted in stages, the defrosting control is precise, the defrosting efficiency is increased, the energy consumption of defrosting is reduced, and the user experience is improved.

As shown in FIG. 10, FIG. 10 is a schematic flowchart of a method for defrosting a refrigerator according to a third embodiment of the present invention

A plurality of middle inlets 513 are provided, the plurality of middle inlets 513 include a first middle inlet away from the main inlet 511 and a second middle inlet adjacent to the main inlet 511. The partial defrosting mode includes a first partial defrosting mode and a second partial defrosting mode. When the refrigerator cooling system is in the first partial defrosting mode, the defrosting branch 6 is communicated with the exhaust port of the compressor 2 and the first middle inlet. When the refrigerator cooling system is in the second partial defrosting mode, the defrosting branch 6 is communicated with the exhaust port of the compressor 2 and the second middle inlet.

In this embodiment, with respect to the second embodiment of the method for defrosting a refrigerator, the method further includes the following operations:
S211, when T is equal to T21, switching the refrigerator cooling system to enter the first partial defrosting mode, and when the preset condition is reached, switching the refrigerator cooling system from the first partial defrosting mode to the cooling working mode, wherein T21 is a preset cooling duration for a first partial defrosting, and T21 is less than T1.

It should be noted that the preset condition may be satisfying a time condition, or satisfying a temperature condition, and so on.

S212, when T is equal to T22, switching the refrigerator cooling system to enter the second partial defrosting mode, and when the preset condition is reached, switching the refrigerator cooling system from the second partial defrosting mode to the cooling working mode, wherein T22 is a preset cooling duration for a second partial defrosting, and T22 is less than T1 and greater than T21.

It should be noted that the preset condition may be satisfying a time condition, or satisfying a temperature condition, and so on.

The heat exchange core tube 51 is divided more accurately, and the defrosting is more accurately segmented. After a period of time, it is possible to defrost the parts that are more prone to frost. After a long period of time, the heat exchange core tube 51 is defrosted as a whole, the defrosting control is precise, the defrosting efficiency is increased, the energy consumption of defrosting is reduced, and the user experience is improved.

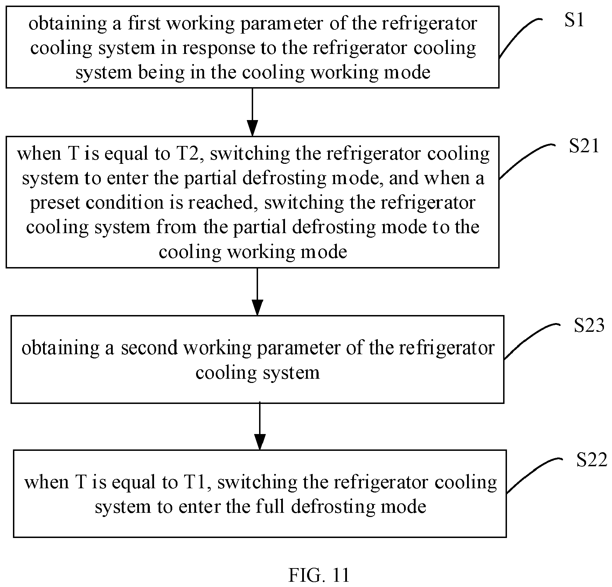

As shown in FIG. 11, FIG. 11 is a schematic flowchart of a method for defrosting a refrigerator according to a fourth embodiment of the present invention

In this embodiment, with respect to the second embodiment of the method for defrosting a refrigerator, the method further includes the following operations:
S23, obtaining a second working parameter of the refrigerator cooling system.

It should be noted that the second working parameter includes a temperature parameter and a working duration parameter. When the refrigerator cooling system 100 switches from the full defrost working mode to the cooling working mode, or switches from the partial defrosting working mode to the cooling working mode, the second working parameter of the refrigerator cooling system 100 needs to be obtained, and when the second working parameter reaches the parameter preset value, the mode is switched.

In an embodiment, the second working parameter is the actual temperature parameter t of the evaporator 5, and the preset condition is that t is equal to 11, t1 is the temperature preset value. It should be noted that, in the entire cooling system of the refrigerator, the evaporator 5 provides cold energy to the refrigerator chamber and the freezing chamber of the refrigerator. During the long-term operation of the evaporator 5, frost will form on the part of the evaporator 5 correspondingly. The degree of frost formation in the refrigerator can be known by detecting the surface temperature of the evaporator 5 of the refrigerator, which is usually the surface temperature of the evaporator 5 obtained by the temperature sensor 8.

Besides, it should be noted that when the middle inlet 513 divides the heat exchange core tube 51 into a plurality of heat exchange sections, each length of the heat exchange section is provided with a temperature sensor 8. When performing mode switching, the temperature conditions of multiple temperature sensors 8 can be considered at the same time. For example, when the refrigerator cooling system 100 is in the full defrosting mode, it can be considered that when the temperature of the temperature sensor 8 on each of the heat exchange sections reaches the preset temperature, it switches to the cooling working mode. When the refrigerator cooling system 100 is in the partial defrosting mode, it may be considered that when the temperature of the temperature sensor 8 on the heat exchange section for the local circulating refrigerant reaches the preset temperature, it switches to the cooling working mode.

The above are only some embodiments of the present invention and do not limit the scope of the present invention thereto.

## Claims

1. A refrigerator cooling system (100), comprising:
a refrigerant circulation flow path (1) provided with a compressor (2), a condenser (3), a throttling device (4) and an evaporator (5);
a defrosting branch (6); and
a switching device (7),
wherein:
the evaporator (5) comprises a heat exchange core tube (51),
the heat exchange core tube (51) comprises a main inlet (511) communicated with the throttling device (4) and a main outlet (512) communicated with the compressor (2),
a middle section of the heat exchange core tube (51) is provided with at least a middle inlets (513),
a section of the refrigerant circulation flow path (1) between an exhaust port of the compressor (2) and the main inlet (511) of the evaporator (5) is a first flow path section (11),
wherein both the condenser (3) and the throttling device (4) are located on the first flow path section (11),
the defrosting branch (6) is connected among the exhaust port of the compressor (2), the main inlet (511) and the at least one middle inlets (513),
the switching device (7) is for switching the defrosting branch (6) to communicate the exhaust port of the compressor (2) with at least one of the followings: the main inlet (511) and the at least one middle inlets (513), to enter a defrosting working mode, and
the switching device (7) is further for switching the first flow path section (11) to be in a circulating state, to enter a cooling working mode.

2. The refrigerator cooling system (100) of claim 1, wherein:
the defrosting branch (6) has an input port and a plurality of output ports,
the input port is connected between the exhaust port of the compressor (2) and the condenser (3),
the plurality of output ports are respectively provided corresponding to the main inlet (511) and at least one middle inlets (513),
the switching device (7) comprises a first switching device (7) and a second switching device (7),
wherein the first switching device (7) is for switching at least one of the plurality of output ports to communicate with either a corresponding main inlet (511) or the at least one middle inlets (513), and
the second switching device (7) is for switching either the input port or the first flow path section (11) to communicate with the exhaust port of the compressor (2).

3. The refrigerator cooling system (100) of claim 2, wherein the first switching device (7) comprises a first three-way valve (71), the first three-way valve (71) is formed with three first communication ports (711) that communicate with each other, wherein two of the three first communication ports (711) are connected in series between the defrosting branch (6) and the main inlet (511), and the other first communication port (711) is connected to one of the middle inlets (513).

4. The refrigerator cooling system (100) of claim 3, wherein:
the middle section of the heat exchange core tube (51) is provided with a plurality of middle inlets (513),
the first switching device (7) comprises a plurality of first three-way valves (71),
two first communication ports (711) of each of the plurality of first three-way valves (71) are connected in series between the defrosting branch (6) and the main inlet (511), and
the other communication ports of the plurality of first three-way valves (71) are correspondingly connected to the plurality of middle inlets (513).

5. The refrigerator cooling system (100) of claim 3, wherein the first three-way valve (71) is an electromagnetic three-way valve.

6. The refrigerator cooling system (100) of claim 2, wherein:
the second switching device (7) comprises a second three-way valve (72), wherein the second three-way valve (72) is formed with three second communication ports (721) that communicate with each other, and
a first one of the three second communication ports (721) is communicated with the first flow path section (11), a second one of the three second communication ports (721) is communicated with the exhaust port of the compressor (2), and a third one of the three second communication ports (721) is communicated with the defrosting branch (6).

7. The refrigerator cooling system (100) of claim 6, wherein the second three-way valve (72) is an electromagnetic three-way valve.

8. The refrigerator cooling system (100) of claim 1, wherein the switching device (7) is an electrical switching device (7), and the refrigerator cooling system (100) further comprises:
a temperature sensor (8) for detecting a surface temperature of the evaporator (5); and
a control assembly electrically connected to the temperature sensor (8) and the electrical switching device (7), to switch a working mode of the refrigerator cooling system (100) according to a temperature obtained by the temperature sensor (8).

9. The refrigerator cooling system (100) of claim 8, wherein the at least one middle inlet (513) is configured to divide the heat exchange core tube (51) into a plurality of heat exchange sections, and a plurality of the temperature sensors (8) are provided corresponding to the plurality of the heat exchange sections.

10. A method for defrosting a refrigerator applied to a refrigerator cooling system (100) of any one of claims 1 to 9, wherein:
a defrosting working mode comprises a full defrosting mode and at least a partial defrosting mode,
in response to the refrigerator cooling system (100) being in the full defrosting mode, a defrosting branch (6) is communicated with an exhaust port of a compressor (2) and a main inlet (511),
in response to the refrigerator cooling system (100) being in the partial defrosting mode, the defrosting branch (6) is communicated with the exhaust port of the compressor (2) and a middle inlet (513),
the method for defrosting the refrigerator comprises following operations:
(51) obtaining a first working parameter of the refrigerator cooling system (100) in response to the refrigerator cooling system (100) being in the cooling working mode; and
(52) switching the refrigerator cooling system (100) to enter the full defrosting mode and the partial defrosting mode according to the first working parameter.

11. The method for defrosting the refrigerator of claim 10, wherein the first working parameter is an actual working duration parameter T, and the operation of (S2) switching the refrigerator cooling system (100) to enter the full defrosting mode and the partial defrosting mode according to the first working parameter comprises:
(S21) when T is equal to T2, switching the refrigerator cooling system (100) to enter the partial defrosting mode, and when a preset condition is reached, switching the refrigerator cooling system (100) from the partial defrosting mode to the cooling working mode, wherein T2 is a preset cooling duration for partial defrosting; and
(S22) when T is equal to T1, switching the refrigerator cooling system (100) to enter the full defrosting mode, wherein T1 is a preset cooling duration period for full defrosting, and T1 is greater than T2.

12. The method for defrosting the refrigerator of claim 11, wherein a plurality of the middle inlets (513) are provided, the plurality of middle inlets (513) comprise a first middle inlet (513) away from the main inlet (511) and a second middle inlet (513) adjacent to the main inlet (511), the partial defrosting mode comprises a first partial defrosting mode and a second partial defrosting mode,
in response to the refrigerator cooling system (100) being in the first partial defrosting mode, the defrosting branch (6) is communicated with the exhaust port of the compressor (2) and the first middle inlet (513),
in response to the refrigerator cooling system (100) being in the second partial defrosting mode, the defrosting branch (6) is communicated with the exhaust port of the compressor (2) and the second middle inlet (513),
the operation of (S21) when T is equal to T2, switching the refrigerator cooling system (100) to enter the partial defrosting mode, and when the preset condition is reached, switching the refrigerator cooling system (100) from the partial defrosting mode to the cooling working mode comprises:
(S211) when T is equal to T21, switching the refrigerator cooling system (100) to enter the first partial defrosting mode, and when the preset condition is reached, switching the refrigerator cooling system (100) from the first partial defrosting mode to the cooling working mode, wherein T21 is a preset cooling duration for a first partial defrosting, and T21 is less than T1; and
(S212) when T is equal to T22, switching the refrigerator cooling system (100) to enter the second partial defrosting mode, and when the preset condition is reached, switching the refrigerator cooling system (100) from the second partial defrosting mode to the cooling working mode, wherein T22 is a preset cooling duration for a second partial defrosting, and T22 is less than T1 and greater than T21.

13. The method for defrosting the refrigerator of claim 11, wherein the operation of (S21) when T is equal to T2, switching the refrigerator cooling system (100) to enter the partial defrosting mode, and when the preset condition is reached, switching the refrigerator cooling system (100) from the partial defrosting mode to the cooling working mode further comprises:
(S23) obtaining a second working parameter of the refrigerator cooling system (100),
wherein the preset condition is that the second working parameter reaches a preset parameter value.

14. The method for defrosting the refrigerator of claim 13, wherein the second working parameter is an actual temperature parameter t of the evaporator (5), the preset condition is that t is equal to t1, and t1 is a preset temperature value.

15. The method for defrosting the refrigerator of claim 13, wherein the first working parameter and/or the second working parameter comprises a temperature parameter and a working duration parameter.

## Patentansprüche

1. Kühlschrank-Kühlsystem (100), umfassend:
einen Kältemittelkreislaufströmungspfad (1), der mit einem Kompressor (2), einem Kondensator (3), einer Drosselvorrichtung (4) und einem Verdampfer (5) versehen ist;
einen Abtauzweig (6); und
eine Schaltvorrichtung (7),
wobei:
der Verdampfer (5) ein Wärmeaustauschkernrohr (51) umfasst,
das Wärmeaustauschkernrohr (51) einen Haupteinlass (511) umfasst, der mit der Drosselvorrichtung (4) in Verbindung steht, und einen Hauptauslass (512), der mit dem Kompressor (2) in Verbindung steht,
ein mittlerer Abschnitt des Wärmeaustauschkernrohrs (51) mit mindestens einem mittleren Einlass (513) versehen ist,
ein Abschnitt des Kältemittelkreislaufströmungspfads (1) zwischen einer Abluftöffnung des Kompressors (2) und dem Haupteinlass (511) des Verdampfers (5) ein erster Strömungspfadabschnitt (11) ist,
wobei sich sowohl der Kondensator (3) als auch die Drosseleinrichtung (4) auf dem ersten Strömungspfadabschnitt (11) befinden,
der Abtauzweig (6) mit der Abluftöffnung des Kompressors (2), dem Haupteinlass (511) und dem mindestens einen mittleren Einlass (513) verbunden ist,
die Schaltvorrichtung (7) dazu dient, den Abtauzweig (6) so zu schalten, dass er die Abluftöffnung des Kompressors (2) mit mindestens einem der folgenden Anschlüsse verbindet: dem Haupteinlass (511) und dem mindestens einen mittleren Einlass (513), um in einen Abtauarbeitsmodus zu gelangen, und
die Schaltvorrichtung (7) ferner dazu dient, den ersten Strömungspfadabschnitt (11) in einen Zirkulationszustand zu schalten, um in einen Kühlarbeitsmodus einzutreten.

2. Kühlschrank-Kühlsystem (100) gemäß Anspruch 1, wobei:
der Abtauzweig (6) einen Eingangsanschluss und eine Vielzahl von Ausgangsanschlüssen aufweist,
der Eingangsanschluss zwischen der Abluftöffnung des Kompressors (2) und dem Kondensator (3) verbunden ist,
die Vielzahl der Ausgangsanschlüsse jeweils entsprechend dem Haupteinlass (511) und mindestens einem mittleren Einlass (513) vorgesehen sind,
die Schaltvorrichtung (7) eine erste Schaltvorrichtung (7) und eine zweite Schaltvorrichtung (7) umfasst,
wobei die erste Schaltvorrichtung (7) dazu dient, mindestens einen der Vielzahl von Ausgangsanschlüssen so zu schalten, dass er entweder mit einem entsprechenden Haupteinlass (511) oder dem mindestens einen mittleren Einlass (513) verbunden ist, und
die zweite Schaltvorrichtung (7) dazu dient, entweder den Eingangsanschluss oder den ersten Strömungspfadabschnitt (11) so zu schalten, dass er mit der Abluftöffnung des Kompressors (2) in Verbindung steht.

3. Kühlschrank-Kühlsystem (100) gemäß Anspruch 2, wobei die erste Schaltvorrichtung (7) ein erstes Dreiwegeventil (71) umfasst, wobei das erste Dreiwegeventil (71) mit drei ersten Verbindungsanschlüssen (711) ausgebildet ist, die miteinander in Verbindung stehen, wobei zwei der drei ersten Verbindungsanschlüsse (711) in Reihe zwischen dem Abtauzweig (6) und dem Haupteinlass (511) geschaltet sind, und der andere erste Verbindungsanschluss (711) mit einem der mittleren Einlässe (513) verbunden ist.

4. Kühlschrank-Kühlsystem (100) gemäß Anspruch 3, wobei:
der mittlere Abschnitt des Wärmeaustauschkernrohrs (51) mit einer Vielzahl von mittleren Einlässen (513) versehen ist,
die erste Schaltvorrichtung (7) eine Vielzahl von ersten Dreiwegeventilen (71) umfasst,
zwei erste Verbindungsanschlüsse (711) jedes der Vielzahl von ersten Dreiwegeventilen (71) zwischen dem Abtauzweig (6) und dem Haupteinlass (511) in Reihe geschaltet sind, und
die anderen Verbindungsanschlüsse der Vielzahl von ersten Dreiwegeventilen (71) entsprechend mit der Vielzahl von mittleren Einlässen (513) verbunden sind.

5. Kühlschrank-Kühlsystem (100) gemäß Anspruch 3, wobei das erste Dreiwegeventil (71) ein elektromagnetisches Dreiwegeventil ist.

6. Kühlschrank-Kühlsystem (100) gemäß Anspruch 2, wobei:
die zweite Schaltvorrichtung (7) ein zweites Dreiwegeventil (72) umfasst, wobei das zweite Dreiwegeventil (72) mit drei zweiten Verbindungsanschlüssen (721) ausgebildet ist, die miteinander in Verbindung stehen, und
ein erster der drei zweiten Verbindungsanschlüsse (721) mit dem ersten Strömungspfadabschnitt (11) verbunden ist, ein zweiter der drei zweiten Verbindungsanschlüsse (721) mit der Abluftöffnung des Kompressors (2) verbunden ist und ein dritter der drei zweiten Verbindungsanschlüsse (721) mit dem Abtauzweig (6) verbunden ist.

7. Kühlschrank-Kühlsystem (100) gemäß Anspruch 6, wobei das zweite Dreiwegeventil (72) ein elektromagnetisches Dreiwegeventil ist.

8. Kühlschrank-Kühlsystem (100) gemäß Anspruch 1, wobei die Schaltvorrichtung (7) eine elektrische Schaltvorrichtung (7) ist und das Kühlschrank-Kühlsystem (100) ferner Folgendes umfasst:
einen Temperatursensor (8) zum Erfassen einer Oberflächentemperatur des Verdampfers (5); und
eine Steueranordnung, die elektrisch mit dem Temperatursensor (8) und der elektrischen Schaltvorrichtung (7) verbunden ist, um einen Arbeitsmodus des Kühlschrank-Kühlsystems (100) gemäß einer durch den Temperatursensor (8) erhaltenen Temperatur zu schalten.

9. Kühlschrank-Kühlsystem (100) gemäß Anspruch 8, wobei der mindestens eine mittlere Einlass (513) so konfiguriert ist, dass er das Wärmeaustauschkernrohr (51) in eine Vielzahl von Wärmeaustauschabschnitten unterteilt, und eine Vielzahl von Temperatursensoren (8) entsprechend der Vielzahl von Wärmeaustauschabschnitten vorgesehen sind.

10. Verfahren zum Abtauen eines Kühlschranks, das auf ein Kühlschrank-Kühlsystem (100) gemäß einem der Ansprüche 1 bis 9 angewendet wird, wobei:
ein Abtau-Betriebmodus einen Vollabtaumodus und zumindest einen Teilabtaumodus umfasst,
als Reaktion darauf, dass sich das Kühlschrank-Kühlsystem (100) im Vollabtaumodus befindet, ein Abtauzweig (6) mit einer Abluftöffnung eines Kompressors (2) und einem Haupteinlass (511) verbunden ist,
als Reaktion darauf, dass sich das Kühlschrank-Kühlsystem (100) im Teilabtaumodus befindet, der Abtauzweig (6) mit der Abluftöffnung des Kompressors (2) und einem mittleren Einlass (513) verbunden ist,
das Verfahren zum Abtauen des Kühlschranks die folgenden Schritte umfasst:
(51) Erhalten eines ersten Arbeitsparameters des Kühlschrank-Kühlsystems (100) als Reaktion darauf, dass sich das Kühlschrank-Kühlsystem (100) in dem Kühlarbeitsmodus befindet; und
(S2) Umschalten des Kühlschrank-Kühlsystems (100), so dass es in den Vollabtaumodus und in den Teilabtaumodus gemäß dem ersten Arbeitsparameter eintritt.

11. Verfahren zum Abtauen des Kühlschranks gemäß Anspruch 10, wobei der erste Arbeitsparameter ein Parameter für die tatsächliche Arbeitsdauer T ist, und der Vorgang (S2) des Umschaltens des Kühlschrank-Kühlsystems (100), so dass es in den Vollabtaumodus und den Teilabtaumodus gemäß dem ersten Arbeitsparameter eintritt, Folgendes umfasst:
(S21) wenn T gleich T2 ist, Umschalten des Kühlschrank-Kühlsystems (100), so dass es in den Teilabtaumodus eintritt, und wenn eine voreingestellte Bedingung erreicht ist, Umschalten des Kühlschrank-Kühlsystems (100) von dem Teilabtaumodus in den Kühlarbeitsmodus, wobei T2 eine voreingestellte Kühldauer für das Teilabtauen ist; und
(S22), wenn T gleich T1 ist, Umschalten des Kühlschrank-Kühlsystems (100), so dass es in den Vollabtaumodus eintritt, wobei T1 eine voreingestellte Kühldauer für das Vollabtauen ist und T1 größer als T2 ist.

12. Verfahren zum Abtauen des Kühlschranks gemäß Anspruch 11, wobei eine Vielzahl von mittleren Einlässen (513) vorgesehen ist, wobei die Vielzahl von mittleren Einlässen (513) einen ersten mittleren Einlass (513), der vom Haupteinlass (511) entfernt ist, und einen zweiten mittleren Einlass (513), der an den Haupteinlass (511) angrenzt, umfassen, wobei der Teilabtaumodus einen ersten Teilabtaumodus und einen zweiten Teilabtaumodus umfasst,
als Reaktion darauf, dass sich das Kühlschrank-Kühlsystem (100) im ersten Teilabtaumodus befindet, der Abtauzweig (6) mit der Abluftöffnung des Kompressors (2) und dem ersten mittleren Einlass (513) verbunden ist,
als Reaktion darauf, dass sich das Kühlschrank-Kühlsystem (100) im zweiten Teilabtaumodus befindet, der Abtauzweig (6) mit der Abluftöffnung des Kompressors (2) und dem zweiten mittleren Einlass (513) verbunden ist,
der Vorgang von (S21), wenn T gleich T2 ist, Umschalten des Kühlschrank-Kühlsystems (100), so dass es in den Teilabtaumodus eintritt, und wenn die voreingestellte Bedingung erreicht ist, Umschalten des Kühlschrank-Kühlsystems (100) von dem Teilabtaumodus in den Kühlarbeitsmodus, Folgendes umfasst:
(S211) wenn T gleich T21 ist, Umschalten des Kühlschrank-Kühlsystems (100), so dass es in den ersten Teilabtaumodus eintritt, und wenn die voreingestellte Bedingung erreicht ist, Umschalten des Kühlschrank-Kühlsystems (100) von dem ersten Teilabtaumodus in den Kühlarbeitsmodus, wobei T21 eine voreingestellte Kühldauer für ein erstes Teilabtauen ist und T21 kleiner als T1 ist; und
(S212), wenn T gleich T22 ist, Umschalten des Kühlschrank-Kühlsystems (100), so dass es in den zweiten Teilabtaumodus eintritt, und wenn die voreingestellte Bedingung erreicht ist, Umschalten des Kühlschrank-Kühlsystems (100) vom zweiten Teilabtaumodus in den Kühlarbeitsmodus, wobei T22 eine voreingestellte Kühldauer für ein zweites Teilabtauen ist und T22 kleiner als T1 und größer als T21 ist.

13. Verfahren zum Abtauen des Kühlschranks gemäß Anspruch 11, wobei der Vorgang (S21), wenn T gleich T2 ist, Umschalten des Kühlschrank-Kühlsystems (100), so dass es in den Teilabtaumodus eintritt, und, wenn die voreingestellte Bedingung erreicht ist, Umschalten des Kühlschrank-Kühlsystems (100) vom Teilabtaumodus in den Kühlarbeitsmodus, ferner Folgendes umfasst:
(S23) Erhalten eines zweiten Arbeitsparameters des Kühlschrank-Kühlsystems (100),
wobei die voreingestellte Bedingung darin besteht, dass der zweite Arbeitsparameter einen voreingestellten Parameterwert erreicht.

14. Verfahren zum Abtauen des Kühlschranks gemäß Anspruch 13, wobei der zweite Arbeitsparameter ein tatsächlicher Temperaturparameter t des Verdampfers (5) ist, die voreingestellte Bedingung ist, dass t gleich t1 ist, und t1 ein voreingestellter Temperaturwert ist.

15. Verfahren zum Abtauen des Kühlschranks gemäß Anspruch 13, wobei der erste Arbeitsparameter und/oder der zweite Arbeitsparameter einen Temperaturparameter und einen Arbeitsdauerparameter umfasst.

## Revendications

1. Système de refroidissement d'un réfrigérateur (100), comprenant :
un trajet du flux de circulation de réfrigérant (1) équipé d'un compresseur (2), d'un condenseur (3), d'un dispositif d'étranglement (4) et d'un évaporateur (5) ;
une branche de dégivrage (6) ; et
un dispositif de commutation (7),
dans lequel :
l'évaporateur (5) comprend un tube central d'échange thermique (51),
le tube central d'échange thermique (51) comprend une entrée principale (511) communiquée avec le dispositif d'étranglement (4) et une sortie principale (512) communiquée avec le compresseur (2),
une section médiane du tube central d'échange thermique (51) est pourvue d'au moins une entrée médiane (513),
une section du trajet du flux de circulation du réfrigérant (1) entre un orifice d'échappement du compresseur (2) et l'entrée principale (511) de l'évaporateur (5) est une première section de trajet de circulation (11),
dans lequel le condenseur (3) et le dispositif d'étranglement (4) sont tous deux situés sur la première section de trajet de circulation (11),
la branche de dégivrage (6) est reliée à l'orifice d'échappement du compresseur (2), à l'entrée principale (511) et à au moins une entrée intermédiaire (513),
le dispositif de commutation (7) est destiné à commuter la branche de dégivrage (6) pour faire communiquer l'orifice d'échappement du compresseur (2) avec au moins l'une des entrées suivantes: l'entrée principale (511) et au moins une entrée intermédiaire (513), afin d'entrer dans un mode de travail de dégivrage, et
le dispositif de commutation (7) est en outre destiné à faire passer la première section de trajet de circulation (11) en mode de circulation, afin d'entrer dans un mode de fonctionnement de refroidissement.

2. Le système de refroidissement d'un réfrigérateur (100) de la revendication 1, dans lequel :
la branche de dégivrage (6) comporte un orifice d'entrée et plusieurs orifices de sortie,
l'orifice d'entrée est connecté entre l'orifice d'échappement du compresseur (2) et le condenseur (3),
la pluralité d'orifices de sortie correspond respectivement à l'entrée principale (511) et à au moins une entrée intermédiaire (513),
le dispositif de commutation (7) comprend un premier dispositif de commutation (7) et un second dispositif de commutation (7),
dans lequel le premier dispositif de commutation (7) est destiné à commuter au moins un des ports de sortie de la pluralité de ports de sortie pour communiquer soit avec une entrée principale correspondante (511), soit avec au moins une entrée intermédiaire (513), et
le second dispositif de commutation (7) est destiné à commuter soit l'orifice d'entrée, soit la première section de trajet de circulation (11) pour communiquer avec l'orifice d'échappement du compresseur (2).

3. Le système de refroidissement d'un réfrigérateur (100) de la revendication 2, dans lequel le premier dispositif de commutation (7) comprend une première vanne à trois voies (71), la première vanne à trois voies (71) est formée avec trois premiers ports de communication (711) qui communiquent entre eux, dans lequel deux des trois premiers ports de communication (711) sont connectés en série entre la branche de dégivrage (6) et l'entrée principale (511), et l'autre premier port de communication (711) est connecté à l'une des entrées intermédiaires (513).

4. Le système de refroidissement d'un réfrigérateur (100) de la revendication 3, dans lequel :
la section centrale du tube central d'échange thermique (51) est pourvue d'une pluralité d'entrées centrales (513),
le premier dispositif de commutation (7) comprend plusieurs premières vannes à trois voies (71),
deux premiers ports de communication (711) de chacune des premières vannes à trois voies (71) sont connectés en série entre la branche de dégivrage (6) et l'entrée principale (511), et
les autres ports de communication de la pluralité de premières vannes à trois voies (71) sont reliés de manière correspondante à la pluralité d'entrées centrales (513).

5. Le système de refroidissement d'un réfrigérateur (100) de la revendication 3, dans lequel la première vanne à trois voies (71) est une vanne à trois voies électromagnétique.

6. Le système de refroidissement d'un réfrigérateur (100) de la revendication 2, dans lequel :
le deuxième dispositif de commutation (7) comprend une deuxième vanne à trois voies (72), dans laquelle la deuxième vanne à trois voies (72) est formée de trois deuxièmes ports de communication (721) qui communiquent entre eux, et
un premier des trois seconds ports de communication (721) est communiqué avec la première section de trajet de circulation (11), un second des trois seconds ports de communication (721) est communiqué avec l'orifice d'échappement du compresseur (2), et un troisième des trois seconds ports de communication (721) est communiqué avec la branche de dégivrage (6).

7. Système de refroidissement d'un réfrigérateur (100) de la revendication 6, dans lequel la deuxième vanne à trois voies (72) est une vanne à trois voies électromagnétique.

8. Le système de refroidissement d'un réfrigérateur (100) de la revendication 1, dans lequel le dispositif de commutation (7) est un dispositif de commutation électrique (7), et le système de refroidissement de réfrigérateur (100) comprend en outre :
un capteur de température (8) pour détecter la température de surface de l'évaporateur (5) ; et
un ensemble de commande connecté électriquement au capteur de température (8) et au dispositif de commutation électrique (7), pour commuter un mode de fonctionnement du système de refroidissement du réfrigérateur (100) en fonction d'une température obtenue par le capteur de température (8).

9. Le système de refroidissement d'un réfrigérateur (100) de la revendication 8, dans lequel l'au moins une entrée centrale (513) est configurée pour diviser le tube central d'échange thermique (51) en une pluralité de sections d'échange de chaleur, et une pluralité de capteurs de température (8) sont prévus pour correspondre à la pluralité de sections d'échange de chaleur.

10. Méthode de dégivrage d'un réfrigérateur appliquée à un système de refroidissement de réfrigérateur (100) de l'une quelconque des revendications 1 à 9, dans laquelle :
un mode de travail de dégivrage comprend un mode de dégivrage complet et au moins un mode de dégivrage partiel,
lorsque le système de refroidissement du réfrigérateur (100) est en mode de dégivrage complet, une branche de dégivrage (6) est reliée à un orifice d'échappement d'un compresseur (2) et à une entrée principale (511),
lorsque le système de refroidissement du réfrigérateur (100) est en mode de dégivrage partiel, la branche de dégivrage (6) est en communication avec l'orifice d'échappement du compresseur (2) et une entrée centrale (513),
la méthode de dégivrage du réfrigérateur comprend les opérations suivantes :
(51) obtenir un premier paramètre de fonctionnement du système de refroidissement du réfrigérateur (100) en réponse au fait que le système de refroidissement du réfrigérateur (100) est en mode de fonctionnement de refroidissement ; et
(S2) faire passer le système de refroidissement du réfrigérateur (100) en mode de dégivrage complet et en mode de dégivrage partiel en fonction du premier paramètre de travail.

11. Le méthode de dégivrage du réfrigérateur de la revendication 10, dans lequel le premier paramètre de travail est un paramètre de durée de travail réelle T, et l'opération de (S2) commutation du système de refroidissement du réfrigérateur (100) pour entrer dans le mode de dégivrage complet et le mode de dégivrage partiel en fonction du premier paramètre de travail comprend :
(S21) lorsque T est égal à T2, commutation du système de refroidissement du réfrigérateur (100) pour passer en mode de dégivrage partiel, et lorsqu'une condition prédéfinie est atteinte, commutation du système de refroidissement du réfrigérateur (100) du mode de dégivrage partiel au mode de travail de refroidissement, dans lequel T2 est une durée de refroidissement prédéfinie pour le dégivrage partiel ; et
(S22) lorsque T est égal à T1, le système de refroidissement du réfrigérateur (100) passe en mode de dégivrage complet, T1 étant une période de refroidissement prédéfinie pour le dégivrage complet, et T1 étant supérieur à T2.

12. Méthode de dégivrage du réfrigérateur selon la revendication 11, dans laquelle plusieurs entrées médianes (513) sont prévues, les plusieurs entrées médianes (513) comprenant une première entrée médiane (513) éloignée de l'entrée principale (511) et une seconde entrée médiane (513) adjacente à l'entrée principale (511), le mode de dégivrage partiel comprenant un premier mode de dégivrage partiel et un second mode de dégivrage partiel,
lorsque le système de refroidissement du réfrigérateur (100) est dans le premier mode de dégivrage partiel, la branche de dégivrage (6) est en communication avec l'orifice d'échappement du compresseur (2) et la première entrée centrale (513),
lorsque le système de refroidissement du réfrigérateur (100) est dans le deuxième mode de dégivrage partiel, la branche de dégivrage (6) est en communication avec l'orifice d'échappement du compresseur (2) et la deuxième entrée centrale (513),
l'opération de (S21) lorsque T est égal à T2, commuter le système de refroidissement du réfrigérateur (100) pour entrer dans le mode de dégivrage partiel, et lorsque la condition prédéfinie est atteinte, commuter le système de refroidissement du réfrigérateur (100) du mode de dégivrage partiel au mode de travail de refroidissement comprend :
(S211) lorsque T est égal à T21, commutation du système de refroidissement du réfrigérateur (100) pour entrer dans le premier mode de dégivrage partiel, et lorsque la condition prédéfinie est atteinte, commutation du système de refroidissement du réfrigérateur (100) du premier mode de dégivrage partiel au mode de travail de refroidissement, dans lequel T21 est une durée de refroidissement prédéfinie pour un premier dégivrage partiel, et T21 est inférieur à T1 ; et
(S212) lorsque T est égal à T22, le système de refroidissement du réfrigérateur (100) entre dans le deuxième mode de dégivrage partiel et, lorsque la condition prédéfinie est atteinte, le système de refroidissement du réfrigérateur (100) passe du deuxième mode de dégivrage partiel au mode de travail de refroidissement, T22 étant une durée de refroidissement prédéfinie pour un deuxième dégivrage partiel, et T22 étant inférieur à T1 et supérieur à T21.

13. Méthode de dégivrage du réfrigérateur selon la revendication 11, dans lequel l'opération de (S21) lorsque T est égal à T2, commutation du système de refroidissement du réfrigérateur (100) pour entrer dans le mode de dégivrage partiel, et lorsque la condition prédéfinie est atteinte, commutation du système de refroidissement du réfrigérateur (100) du mode de dégivrage partiel au mode de travail de refroidissement comprend en outre :
(S23) obtention d'un deuxième paramètre de fonctionnement du système de refroidissement du réfrigérateur (100),
dans lequel la condition prédéfinie est que le second paramètre de travail atteigne une valeur prédéfinie.

14. Méthode de dégivrage du réfrigérateur selon la revendication 13, dans laquelle le deuxième paramètre de travail est un paramètre de température réelle t de l'évaporateur (5), la condition prédéfinie est que t est égal à t1, et t1 est une valeur de température prédéfinie.

15. Méthode de dégivrage du réfrigérateur selon la revendication 13, dans laquelle le premier paramètre de travail et/ou le second paramètre de travail comprend un paramètre de température et un paramètre de durée de travail.
